# EUROPEAN PATENT SPECIFICATION

(11) **EP 0 817 575 B1**
(45) Date of publication and mention of the grant of the patent: **09.05.2001**
(21) Application number: 96912487.4
(22) Date of filing: 28.03.1996
(51) Int. Cl.: A23L 3/36, A23L 3/375, A23G 9/04, A23G 9/02

(54) **DROPPER ASSEMBLY FOR LIQUID FEED AND METHOD OF FEEDING LIQUID COMPOSITION TO A FREEZING CHAMBER**
TROPFERSYSTEM FÜR FLÜSSIGKEITSZUFUHR UND ZUFUHRVERFAHREN VON FLÜSSIGEN ZUSAMMENSETZUNGEN INS GEFRIERRAUM
ENSEMBLE D'EGOUTTAGE D'UN LIQUIDE ET PROCEDE D'INTRODUCTION D'UNE COMPOSITION LIQUIDE DANS UNE CHAMBRE DE CONGELATION

(30) Priority: 29.03.1995 US 412727
(43) Date of publication of application: 14.01.1998
(73) Proprietor: Jones, Curt D., Paducah, KY 42001 (US)
(72) Inventor: Jones, Curt D., Paducah, KY 42001 (US)
(74) Representative: Schmitz, Jean-Marie
(86) International application number: PCT/US96/04256
(87) International publication number: WO 96/29896

(56) References cited:
- EP-A- 0 332 287
- EP-A- 0 641 522
- GB-A- 2 092 880
- US-A- 5 126 156
- PATENT ABSTRACTS OF JAPAN vol. 4, no. 101 (C-019), 19 July 1980 & JP,A,55 064761 (NOZU TAKASHI), 15 May 1980,
- PATENT ABSTRACTS OF JAPAN vol. 5, no. 168 (C-077), 27 October 1981 & JP,A,56 096667 (KOMORI NAGAMASA), 4 August 1981,
- PATENT ABSTRACTS OF JAPAN vol. 16, no. 320 (C-0962), 14 July 1992 & JP,A,04 091749 (NAGAGAWA YOSHINARI), 25 March 1992,

## Description

### Technical Field

The present invention relates generally to preparing a frozen product and, more particularly, to a dropper assembly for liquid feed and a method of its use in feeding liquid composition to a freezing chamber during preparation of a free-flowing frozen alimentary dairy product.

### Background of the Invention

Sales of ice cream and frozen yogurt products have risen dramatically in recent years. The applicant herein has captured a portion of this product market through the development of a unique novelty ice cream and frozen yogurt product in the form of beads. This product, marketed under various trademarks, including DIPPIN' DOTS, and ICE CREAM OF THE FUTURE, has become very popular in specialty stores and at fairs and theme parks.

This novelty ice cream and frozen yogurt product is prepared by delivering flavored liquid dairy composition to a feed tray and then dripping the composition into a freezing chamber. The preparation of frozen ices by instantaneously freezing a raw material in a liquid nitrogen atmosphere is the subject of Japanese Patent No. 55, 064, 761. The droplets of liquid composition freeze rapidly upon entry into the freezing chamber, forming solid beads of flavored ice cream or yogurt product. The frozen beads are removed from the freezing chamber and packed for distribution.

The preparation of the novelty ice cream and yogurt product ideally entails the delivery of uniformly sized droplets in order to form consistently uniform beads. Such a system for preparing free-flowing dairy product is discussed in United States Patent US-A-5,126,156. Here, a dairy composition is rapidly frozen by dripping small bead of composition into a temperature controlled refrigerator. It is desirable to eliminate the liquid particles or specks that tend to be released from the feed tray, which, when frozen, form particles in the nature of microbeads and/or dust. The frozen dust is not only undesirable in appearance, but also adversely affect the collection of useable product. Thus, the formation of frozen dust introduces inefficiency into the process of preparing the frozen beaded ice cream and yogurt product. Accordingly, a need is identified to create a way to eliminate the formation of frozen dust and microbeads during product manufacture. It has been determined through experimentation that the configuration of the feed elements associated with the feed tray has a direct affect on the desired result.

### Summary of the Invention

It is, therefore, a primary object of the present invention to provide a sophisticated, frozen dairy product having improved flavor and mass consumer appeal.

Another object of the present invention is to provide a free-flowing frozen alimentary dairy product which is served at a relatively low temperature so as to be more refreshing and exhilarating to the average consumer.

Still another object of the present invention is to provide a method of preparing a free-flowing frozen alimentary dairy product which is quickly frozen so as to prevent the formation of large ice crystals and thereby provide a smoother product with better flavor.

It is a further object of the present invention to provide a dropper assembly for feeding liquid composition to a freezing chamber that substantially eliminates the formation of frozen microbeads and/or dust during the production of a free-flowing frozen alimentary dairy product.

It is a further object of the present invention to provide a dropper assembly that easily and efficiently handles liquid feed.

Another object of the present invention is to provide a method of feeding liquid composition to a freezing chamber with enhanced control over the size of the feed droplets to yield uniformly sized frozen beaded product.

It is an additional object of the present invention to provide a method of feeding liquid composition to a freezing chamber in the form of uniformly sized droplets whereby increased frozen product yield is achieved.

Still another object of the present invention is to facilitate production of a free-flowing frozen alimentary dairy product at a reduced cost and with increased efficiency.

Additional objects, advantages and other novel features of the invention will be set forth in part in the description that follows and in part will become apparent to those skilled in the art upon examination of the following or may be learned with the practice of the invention. The objects and advantages of the invention may be realized and obtained by means of the instrumentalities and combinations particularly pointed out in the appended claims.

To achieve the foregoing and other objects, and in accordance with the purposes of the present invention as described herein, a novel dropper assembly, and a method of feeding liquid composition to a freezing chamber, that achieves the stated goals is presented. The dropper assembly and the associated method are specially directed to feeding liquid composition to a freezing chamber in order to produce uniformly sized beads of frozen product.

The liquid composition is initially prepared for freezing. Preferably, the composition is dairy-based, but may include sugar and other additives for flavor. Once prepared, the alimentary composition is slowly dripped into a freezing chamber. This is accomplished through the use of a dropper assembly.

The dropper assembly comprises a tray that receives the liquid composition from a delivery source. The liquid composition is preferably delivered to the tray by pumping from a supply container. A pump adapted for this purpose is manufactured by Cole-Parmer Instrument Company under the trademark MASTERFLEX.

In a key aspect of the invention, a plurality of feed elements are associated with the tray, the feed elements being specifically adapted for facilitating regulated discharge of liquid composition from the tray and for feeding the liquid composition in uniformly sized droplets. As the droplets fall through the freezing chamber, rapid, almost instantaneous, freezing takes place. As a result of the feeding of uniformly sized droplets to the freezing chamber, uniformly sized beads of frozen product are formed.

Preferably, the freezing chamber is maintained at a temperature below substantially -260° F. This can be accomplished, for example, by utilizing liquid nitrogen as a refrigerant. More specifically, the droplets fall downward in the freezing chamber through the vaporized refrigerant until they actually contact the liquid refrigerant at the bottom of the chamber. This procedure allows the maximum extraction of available refrigeration from the liquid nitrogen. Advantageously, the rapid freezing results in a product that is smoother, creamier and exhibits better flavor. These characteristics, of course, serve to increase the consumer appeal for the product.

Each feed element comprises a projection associated with the tray. Each projection comprises a first end associated with an orifice formed in the tray and a second end at which uniformly sized droplets are formed and released. In order to best facilitate the delivery of liquid composition, the projections are downwardly disposed in relation to the tray. The particular preferred embodiment of the invention has projections extending downwardly from a bottom wall of the tray.

Each projection of the inventive dropper assembly has a flow channel that extends completely therethrough, from the first end to the second end. Further, each projection has a tapered contour that narrows from its first end to its second end. Thus, the flow channel of each projection has an inlet opening at the first end that has a greater dimension than an outlet opening at the second end. This configuration promotes the regulated discharge of liquid composition from the tray.

The ratio of the dimension of the inlet opening to the outlet opening is preferably in the range of substantially 2:1 to substantially 20:1. In the particular preferred embodiment, the inlet opening/outlet opening dimension ratio is substantially 12:1.

After the frozen beads of product are formed, they are collected from the freezing chamber. This may be accomplished by utilizing a auger. The auger may be positioned at an angle of approximately 45° with respect to the horizontal. The auger may also include flights having a diameter of substantially 1.5-3.5 inches. When such an auger is rotated at substantially 10-100 revolutions per minute, the individual frozen beads may be recovered with a minimum loss of refrigerant from the freezing chamber.

The frozen beads of ice cream or yogurt product recovered from the freezing chamber are placed within a container. This container is maintained open for a sufficient period of time, such as, for example, one to ten minutes to allow any residual refrigerant retained in or on the beads during freezing to vaporize. Following this, the container is sealed for storage. The container is then placed in a freezer. The temperature within the freezer is maintained at least as low as -20° F. and, preferably, between -30° and -40° F., if the product is to be stored for periods of greater than approximately 30 hours. This is necessary to insure that the individual beads remain free-flowing and that no large crystals are formed during thaw/refrigeration cycles.

Prior to serving the product for consumption, it is necessary to bring the beads to a temperature of -20° F. or above. If this is not done, the beads are too cold for some individuals to enjoy. More preferably, the beads are maintained at a temperature of substantially -15° F. for no longer than approximately 30 hours prior to serving. If maintained at this or a warmer temperature for a longer period of time, the beads become tacky and begin sticking together. Thus, the unique free-flowing characteristic is lost, and with it, some of the consumer appeal as well. As such, storage at a temperature of -15° F. for longer than 30 hours is to be avoided. For certain compositions, however, it should be recognized that the critical time may be as short as 10 to 12 hours.

Still other objects of the present invention will become apparent to those skilled in this art from the following description wherein there is shown and described a preferred embodiment of this invention, simply by way of illustration of one of the modes best suited to carry out the invention. As will be realized, the invention is capable of other different embodiments and its several details are capable of modification in various, obvious aspects all without departing from the invention. Accordingly, the drawings and descriptions will be regarded as illustrative in nature and not as restrictive.

### Brief Description of the Drawing

The accompanying drawing, incorporated in and forming a part of the specification, illustrates several aspects of the present invention and together with the description, serves to explain the principles of the invention. In the drawing:
Figure 1 is a perspective view of a pair of dropper assemblies positioned above a freezing chamber, and showing the final product of uniformly sized frozen beads;
Figure 2 is a top view of the inventive dropper assembly;
Figure 3 is a side view of the dropper assembly showing the downwardly disposed projections delivering uniformly sized droplets of liquid composition; and
Figure 4 is a side view of a prior art design of a feeding tray.

Reference will now be made in detail to the present preferred embodiment of the invention, an example of which is illustrated in the accompanying drawing.

### Detailed Description of the Invention

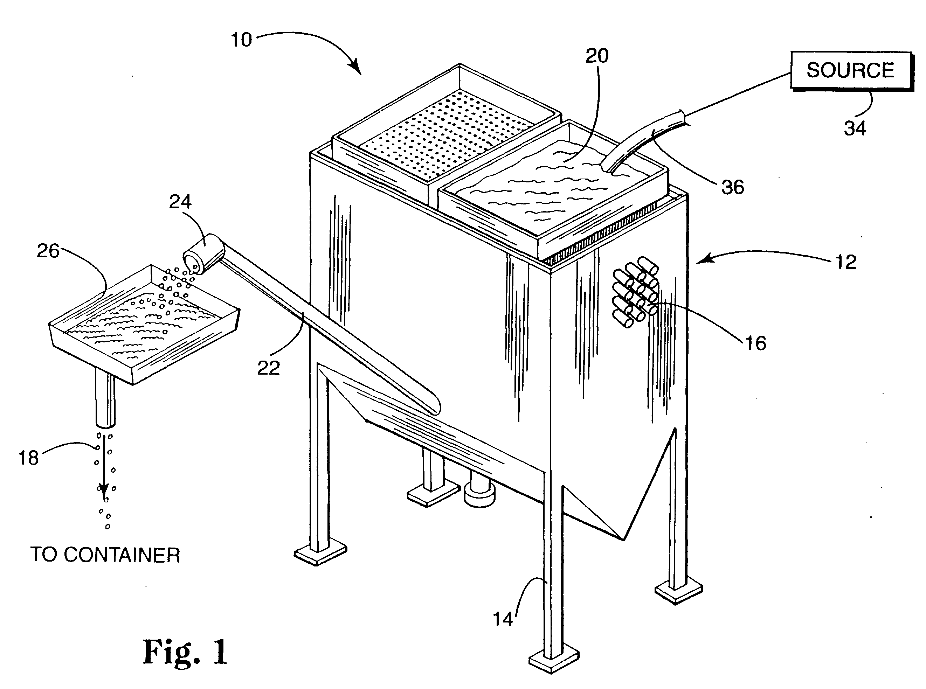

Reference is now made to Figure 1 showing in perspective the components that are utilized to produce free-flowing frozen alimentary dairy products in the form of uniformly sized beads. The illustrated apparatus is merely an example of a design that is adapted to produce the frozen beaded product. The apparatus is depicted in Figure 1 with the inventive dropper assembly 10 that enhances the efficiency of the production process and increases product yield as described below.

The production apparatus includes a freezing chamber 12 having an inner wall and outer wall. Preferably, the walls are constructed of stainless steel to provide both strength and corrosion resistance. A thick layer of thermal insulating material is provided between the walls to improve the efficiency of the freezing chamber 12 by reducing the thermal transfer through the walls between the interior of the chamber and the ambient environment.

The freezing chamber 12 is shown as a freestanding unit supported by legs 14. Alternatively, the freezing chamber 12 may be disposed in a frame that is specially built to support it while in use.

The chamber 12 is chilled by the direct addition of refrigerant from a refrigerant source through a delivery line. A number of different refrigerants can be utilized although liquid nitrogen is preferred. This material is readily available, relatively inexpensive and relatively inert to food products. It is also sufficiently cold to provide for relatively rapid freezing of the product. As such, it is particularly adapted for utilization in the production of free-flowing alimentary dairy products in accordance with the present invention.

The temperature of the freezing chamber 12, as well as the level of liquid refrigerant, is maintained within a specified range through the utilization of a temperature control means such as a thermostat. More specifically, the thermostat may be connected to a thermocouple that is positioned to extend into the freezing chamber 12, at a selected height, for example, 4 to 18 inches above the bottom of the chamber. The thermocouple senses the refrigerant temperature where, for example, liquid nitrogen is utilized as the refrigerant. The thermostat is set to maintain the temperature within the chamber 12 at the thermocouple between -300° to -320° F. The positioning of the thermocouple at approximately 4 to 18 inches above the bottom of the chamber 12 provides the necessary reservoir of refrigerant to quick-freeze the droplets of alimentary composition. The resulting frozen product has a richer, creamier texture and exhibits a better, overall flavor. For example, when the temperature within the chamber 12 at the thermocouple rises above the set range of operation (i.e. -300° to -320° F.), this is an indication that the level of liquid refrigerant has fallen below the thermocouple. As a result of the operation of the thermostat, a valve is then opened to allow delivery of liquid nitrogen from its source through the line to the chamber 12. Once the liquid nitrogen level within the chamber 12 reaches and contacts the thermocouple, the desired level of liquid nitrogen for freezing the composition is restored and the valve is closed.

It is recognized that alternative temperature or level control systems may be utilized. For example, a number of thermocouples may be positioned at various heights within the chamber 12. The thermocouple at the desired liquid refrigerant level to be maintained is then selected and utilized as described above. In another alternative, a liquid nitrogen level controller, such as manufactured and marketed by Minnesota Valley Engineering, Inc. under the trademark CRYO-MED (model LL-450) may be utilized.

Vents 16 are provided in the walls near the top of the freezing chamber 12 to exhaust the gaseous nitrogen as it evaporates from the surface of the liquid. This serves to prevent the creation of excessive pressure within the chamber 12 and minimizes the opportunity for the dropper assembly to become frozen over time. This exhaust can be controlled manually by venting through an exit pipe which is controlled by a damper. Alternatively, the exhaust gas can be collected under vacuum by the use of an exhaust fan. This cold vapor can be routed to other parts of the process where cold vapors can be utilized, such as in storage spaces or with packaging machines.

As a result of the temperature within the range of -260° to -320° F. (for liquid nitrogen), rapid freezing of the droplets of liquid composition occurs, forming beads 18. The beads 18 have a smooth, spherical character.

After the beads 18 are formed, they fall to the bottom of the chamber 12. An auger operates within a shaft 22 to carry the beads 18 upward to a chute. The auger is preferably positioned at an angle of approximately 45° with respect to the horizontal. The auger includes flights having, desirably, a diameter of substantially 1.5 inches to 3.5 inches. By rotating such an auger at substantially 10-100 revolutions per minute, it is possible to complete the collection of the beads 18 from the chamber 12. Liquid refrigerant is not withdrawn from the freezing chamber 12 since sufficient space exists between the flights and the walls of the shaft 22 to allow the liquid nitrogen to drain back into the chamber 12. This space is, however, not large enough to allow the passage of the beads 18.

Upon reaching the chute 24, the beads 18 pass through to a collecting pan 26. The collecting pan 26 then delivers the beads 18 to packaging equipment and subsequently to storage containers. The containers are maintained open for substantially 1-10 minutes in order to allow any residual refrigerant retained in or on the surface of the beads 18 to vaporize. The storage container is then sealed and placed in a freezer in preparation for later use and consumption.

In order to prevent the beads 18 from sticking together during storage, and thereby maintain their free-flowing character, they must be maintained at a relatively low temperature. More specifically, if the beads 18 are to be stored for greater than a period of approximately 30 hours, they should be stored in the freezer at a temperature of at least as low as -20° F. More preferably, the beads 18 are stored at a temperature of between -30° and -40° F.

Alternatively, if the beads 18 are to be consumed within a 30-hour period (or shorter period of 10-12 hours for certain compositions), they are to be stored in a freezer at a temperature of -20° F. or above. More preferably, the beads are brought to a temperature between substantially -10° and -20° F., with -15° F. providing the best results. Warmer temperatures may result in the beads 18 sticking together and the product losing its unique free-flowing character, thereby diminishing its consumer appeal.

The inventive dropper assembly 10 facilitates the efficient formation of frozen beaded product for ultimate use. The dropper assembly 10 preferably comprises a tray 28 having a bottom wall 30 and side walls 32a, 32b, 32c, 32d. The side walls 32a, 32b, 32c, 32d form an enclosure for receiving the liquid composition 20 from a source 34. Typically, a pump drives the liquid composition through a delivery tube 36 into the tray 28. The liquid composition 20 is fed to the freezing chamber 12 as is more fully discussed below.

Figure 1 illustrates two substantially similar dropper assemblies 10 positioned above the freezing chamber 12. These dropper assemblies 10 are shown as having a rectangular configuration and extending completely across the top of the freezing chamber 12 along its minor dimension. It will be understood by those skilled in the art that an assembly 10 having a very large tray 28 may be constructed to cover the entirety of the freezing chamber 12 or, alternatively, smaller trays may be manufactured and placed side by side as shown in Figure 1.

It is recognized that in order to create uniformly sized beads 18 of frozen product, uniformly sized droplets 38 of liquid composition 20 are required to be fed to the freezing chamber 12. The tray 28 is designed with feed elements 40 that form droplets 38 of the desired character.

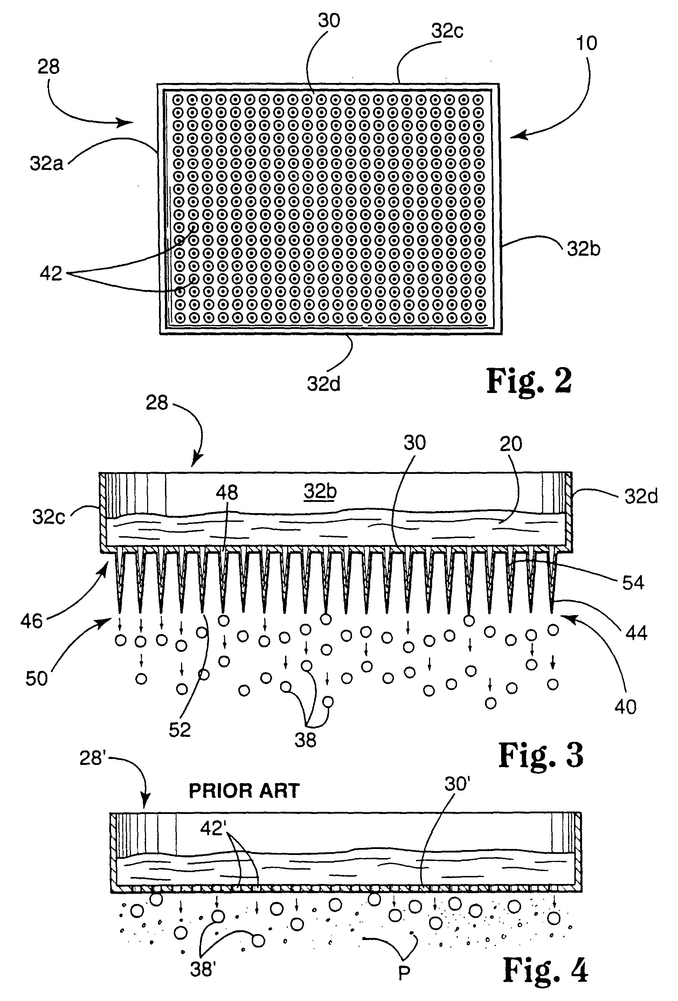

As best shown in the preferred embodiment of Figure 2, the bottom wall 30 of the tray 28 is formed with a plurality of orifices 42. Preferably, the orifices 42 are in an ordered array of rows and columns. It is thus perceived that the liquid composition 20 flows into and through the orifices 42 in the direction of the freezing chamber 12 during the production process.

In a key aspect of the invention, the dropper assembly 10 is formed with projections 44 that are associated with the tray 28 (see Figure 3). More particularly, the preferred embodiment of the invention is designed with a separate projection 44 cooperating with each individual orifice 42 formed in the bottom wall 30 of the tray 28. The projections 44 preferably extend downwardly from the bottom wall 30 of the tray 28 toward the freezing chamber 12. Each projection 44 thus has, at its first end 46, an inlet opening 48 that is in communication with the associated orifice 42 and, at its second end 50, an outlet opening 52.

A flow channel 54 extends the entire length of each projection 44 from the inlet opening 48 to the outlet opening 52. The projections 44 taper to become narrower toward its second end 50. It follows then that the inlet opening 48 has a larger dimension than the outlet opening 52. The narrowing of the flow channel 54 promotes regulated accumulation of the liquid composition 20 and thus promotes regulated discharge of the liquid composition from the tray 28. The design further allows a droplet 38 to be formed in an orderly fashion until the net gravity force overcomes the interfacial tension forces on the droplet 38 and it falls toward the freezing chamber 12.

The flow rate of the liquid composition 20 through the flow channel 54 is a factor in the orderly formation of droplets 38 at the second end 50 of the projection 44. The flow rate is a function of, among other things, the dimensions of the inlet opening 48 and the outlet opening 52. It has been determined that uniformly sized droplets 38 form and are released from the projection 44 when the ratio of the dimension of the inlet opening 48 to the outlet opening 52 is in the range of substantially 2:1 to substantially 20:1. In the particular preferred embodiment of the invention, the inlet opening 48 has a diameter of substantially 0.375 inches and the outlet opening 52 has a diameter of substantially 0.03125 inches. Thus, the dimension ratio of the particular preferred embodiment is substantially 12:1.

The tray 28 and projections 44 are preferably made of durable food grade plastic or stainless steel and may be formed during original manufacture. Alternatively, the projections 44 may be later connected to the tray 28 at associated orifices 42. Pipette tips may be used as the projections 44 integrated with the tray 28 in this instance. The pipette tips of the plastic type may be purchased from instrument distributors such as Cole-Parmer® Instrument Company of Chicago, Illinois.

The principal advantages of the inventive dropper assembly 10 are best recognized by comparison with the prior art, an enlarged illustration of which is presented in Figure 4. Using the prime identifier as a superscript for components similar to those used in the inventive assembly 10, prior art apparatus have a tray 28' in which orifices 42' are formed in the bottom surface 30'. Droplets 38' are formed and released directly from the orifices 42' under the force of gravity. There is no opportunity for regulated accumulation of liquid composition 20' and thus spattering frequently occurs upon release of a droplet 38' from the orifice 42' of the tray 28'. Furthermore, some droplets 38' released from the orifices 42' are so unstable that they break apart into smaller droplets, creating droplets of widely varying sizes and also resulting in further spattering. The very small beads distract from the unique and pleasing appearance of the desirably sized beads and thus it is necessary to eliminate them from the final product.

Furthermore, the spattering created during droplet release and/or break-up generates minute particles P that also fall into the freezing chamber and form particles of frozen microbeads and/or dust that accumulate at the bottom thereof. This creates the need to shut the production process down to clean out the freezing chamber 12. Furthermore, the frozen microbeads represent waste, which obviously decreases efficient operation and production.

Numerous benefits result from the use of the inventive dropper assembly 10 and the method of feeding liquid composition to a freezing chamber 12 using the assembly. In contrast to prior art designs, the projections 44 of the present invention promote the regulated discharge of the liquid composition 20 from the tray 28 and the formation of uniformly sized droplets 38 of liquid composition 20 that, when delivered to the freezing chamber 12, form uniformly sized beads 18 of frozen product. The use of the novel dropper assembly 10 eliminates the need for any filtering requirement, and power to operate filtering components. In addition, the projections 44 prevent the spattering of minute particles of liquid composition 20 and thus prevents the formation of frozen microbeads and/or dust that have previously accumulated at the bottom of the freezing chamber 12.

The foregoing description of a preferred embodiment of the invention has been presented for purposes of illustration and description. It is not intended to be exhaustive or to limit the invention to the precise form disclosed. Obvious modifications or variations are possible in light of the above teachings. The embodiment was chosen and described to provide the best illustration of the principles of the invention and its practical application to thereby enable one of ordinary skill in the art to utilize the invention in various embodiments and with various modifications as is suited to the particular use contemplated. All such modifications and variations are within the scope of the invention as determined by the appended claims when interpreted in accordance with breadth to which they are fairly, legally and equitably entitled.

## Claims

1. A dropper assembly (10) for feeding liquid composition (20) to a freezing chamber (12), comprising:
a tray (28) overlying a freezing chamber (12) and disposed to receive liquid composition (20) from a delivery source (34), said tray (28) having a bottom wall (30) with a plurality of orifices (42) through which the received liquid composition is directed; and
a plurality of feed elements (40) each comprising a projection associated with said tray (28) and disposed for regulated discharge of said liquid composition (20) from said tray (28) and for feeding said liquid composition (20) by gravity only to said freezing chamber (12) in uniformly sized droplets (38), each of said plurality of feed elements (40) being aligned in fluid communication with one of said plurality of orifices (42) in said bottom wall (30) of said tray (28), and each feed element having a flow channel therethrough, with a tapered contour from the end of the feed element proximate to said orifices to the other end thereof, whereby uniformly sized droplets (38) of liquid composition are delivered by gravity to said underlying freezing chamber (12).

2. A method of feeding liquid composition (20) to a freezing chamber (12) containing a refrigerant to form uniformly sized beads (18) of frozen product, comprising the steps of:
providing a dropper assembly (10) having a plurality of feed elements (40) each comprising a projection having a first end and a second end and a flow channel therethrough with a tapered contour which narrows from said first end to said second end, the feed elements being configured to discharge said liquid composition (20) in uniformly sized droplets (38) ;
placing said dropper assembly (10) directly above said freezing chamber (12);
delivering said liquid composition (20) from a source (34) to said dropper assembly (10), where said liquid composition is directed into said first ends of said plurality of feed elements (40);
delivering said liquid composition (20) from said dropper assembly (10) by gravity only to said freezing chamber (12) with regulated discharge out of said second ends of the feed elements, and in uniformly sized droplets (38); and
contacting said uniformly sized droplets (38) with said refrigerant for freezing said droplets (38) into uniformly sized frozen beads (18) of product.

3. The method as in claim 2, wherein said dropper assembly comprises a tray (28) having a plurality of feed elements (40) for regulated discharge of said liquid composition from said tray (28) and for feeding said liquid composition (20) in uniformly sized drops (38).

4. The method as in claim 3, wherein said tray (28) comprises a plurality of orifices formed in a bottom wall (30), each orifice (42) associated with a corresponding projection (44).

5. The dropper assembly (10) as in claim 4, wherein said projection (44) has an inlet opening (48) associated with said first end (46) and an outlet opening (52) associated with said second end (50).

6. A method of feeding liquid composition (20) to a freezing (12) chamber containing a refrigerant to form uniformly sized beads (18) of frozen product, comprising the steps of:
providing a dropper assembly (10) having a plurality of uniformly tapered feed elements (40) configured to discharge said liquid composition (20) in uniformly sized droplets (38);
placing said dropper assembly (10) directly above said freezing chamber (12);
delivering said liquid composition (20) from a source (34) to said dropper assembly (10), where said liquid composition is directed into said plurality of feed elements (40);
delivering said liquid composition (20) from said dropper assembly (10) by gravity only to said freezing chamber (12) with regulated discharge and in uniformly sized droplets (38); and
contacting said uniformly sized droplets (38) with said refrigerant for freezing said droplets (38) into uniformly sized frozen beads (18) of product.

7. The method as in Claim 6, wherein said dropper assembly comprises a tray (28) having a plurality of feed elements (40) for regulated discharge of said liquid composition from said tray (28) and for feeding said liquid composition (20) in uniformly sized drops (38).

8. The method as in Claim 7, wherein said feed elements each comprise a projection (44) associated with said tray (28).

9. The method as in claim 8, wherein said tray (28) comprises a plurality of orifices formed in a bottom wall (30), each orifice (42) associated with a corresponding projection (44).

10. The method as in Claim 9, wherein said projection (44) has a first end (46) associated with said corresponding orifice (42) and a second end (50) spaced from said first end.

## Patentansprüche

1. Tropfzusammenbau (10) für die Zuführung einer flüssigen Zusammensetzung (20) in einen Gefrierraum (12), welcher folgende Komponenten enthält:
einen Trog (28), der über einem Gefrierraum (12) liegt und der dafür eingerichtet ist eine flüssige Zusammensetzung (20) aus einer Beschickungsquelle (34) aufzunehmen, wobei der Trog (28) eine untere Wand (30) mit einer großen Anzahl von Öffnungen (42) besitzt, durch welche die aufgenommene flüssige Zusammensetzung hindurch geschickt wird; und
eine große Anzahl von Zuführungselementen (40) wovon ein jedes eine Verlängerung aufweist, welche mit dem Trog (28) verbundenen ist und angeordnet ist für eine regulierte Abgabe der flüssigen Zusammensetzung (20) aus dem Trog (28) heraus sowie für die Zuführung der flüssigen Zusammensetzung (20) durch die bloße Schwerkraft in den Gefrierraum (12) in einheitlich dimensionierten Tröpfchen (38), wobei ein jedes dieser Zuführungselemente (40) aus der großen Anzahl derselben in einer Verbindung des Fluids mit einer der Öffnungen (42) aus der großen Anzahl derselben in der unteren Wand (30) des Trogs (28) in einer Reihe angeordnet ist, und wobei ein jedes Zuführungselement einen Strömungskanal durch dasselbe hindurch aufweist mit einer verjüngten Umgrenzungslinie von dem Ende des Zuführungselements in der Nähe der Öffnung bis hin zu dem anderen Ende desselben, wodurch einheitlich dimensionierte Tröpfchen (38) der flüssigen Zusammensetzung durch Schwerkraft in den darrunterliegenden Gefrierraum (12) geliefert werden.

2. Verfahren für die Zuführung einer flüssigen Zusammensetzung (20) in einen ein Kühlmittel enthaltenden Gefrierraum (12), um einheitlich dimensionierte Kügelchen (18) des gefrorenen Produktes zu bilden, welches folgende Schritte enthält:
Bereitstellung eines Tropfzusammenbaus (10) mit einer großen Anzahl von Zuführungselementen (40), wovon ein jedes derselben eine Verlängerung enthält mit einem ersten Ende und einem zweiten Ende sowie einem Strömungskanal durch dasselbe mit einer verjüngten Umgrenzungslinie, die sich ausgehend von dem ersten Ende bis hin zu dem zweiten Ende verengt, wobei die Zuführungselemente so gestaltet sind, dass sie die flüssige Zusammensetzung (20) in einheitlich dimensionierten Tröpfchen (38) entladen;
Anordnung des Tropfzusammenbaus (10) direkt über dem Gefrierraum (12);
Lieferung der flüssigen Zusammensetzung (20) aus einer Quelle (34) zu dem Tropfzusammenbau (10), wo die flüssige Zusammensetzung hin zu den ersten Enden der großen Anzahl von Zuführungselementen (40) geleitet wird;
Lieferung der flüssigen Zusammensetzung (20) aus dem Tropfzusammenbau (10) durch bloße Schwerkraft in den Gefrierraum (12) mit einer regulierten Abgabe aus den zweiten Enden der Zuführungselemente und in einheitlich dimensionierten Tröpfchen (38); und
Hervorrufen der Berührung der einheitlich dimensionierten Tröpfchen (38) mit dem Kühlmittel zwecks Frierens der Tröpfchen (38) zu einheitlich dimensionierten Kügelchen (18) des Produkts.

3. Verfahren gemäß Anspruch 2, in welchem der Tropfzusammenbau einen Trog (28) aufweist mit einer großen Anzahl von Zuführungselementen (40) für die regulierte Abgabe der flüssigen Zusammensetzung aus dem Trog (28) und für die Zuführung der flüssigen Zusammensetzung (20) in einheitlich dimensionierten Tropfen (38).

4. Verfahren gemäß Anspruch 3, in welchem der Trog (28) eine große Anzahl von Öffnungen enthält, welche in einer unteren Wand (30) gebildet werden, wobei jede Öffnung (42) mit einer entsprechenden Verlängerung (44) in Verbindung seht.

5. Tropfzusammenbau (10) gemäß Anspruch 4, in welchem die Verlängerung (44) eine Einlassöffnung (48) aufweist, die mit dem ersten Ende (46) in Verbindung steht, sowie eine Auslassöffnung (52) aufweist, die mit dem zweiten Ende (50) in Verbindung steht.

6. Verfahren für die Zuführung einer flüssigen Zusammensetzung (20) zu einem ein Kühlmittel enthaltenden Gefrierraum (12), um einheitlich dimensionierte Kügelchen (18) des gefrorenen Produktes zu bilden, Verfahren das die folgenden Schritte impliziert:
Bereitstellung eines Tropfzusammenbaus (10) mit einer großen Anzahl von einheitlich zugespitzten Zuführungselementen (40), die so gestaltet werden dass sie die flüssige Zusammensetzung (20) in einheitlich dimensionierten Tröpfchen (38) entladen;
Anordnen des Tropfzusammenbaus (10) direkt über dem Gefrierraum (12);
Lieferung der flüssigen Zusammensetzung (20) aus einer Quelle (34) zu dem Tropfzusammenbau (10), in welchem die flüssige Zusammensetzung zu einer großen Anzahl von Zuführungselementen (40) geleitet wird;
Lieferung der flüssigen Zusammensetzung (20) aus dem Tropfzusammenbau (10) durch bloße Schwerkraft in den Gefrierraum (12) mit einer regulierten Abgabe und in einheitlich dimensionierten Tröpfchen (38); und
Hervorrufen der Berührung der einheitlich dimensionierten Tröpfchen (38) mit dem Kühlmittel zwecks Frierens der Tröpfchen (38) zu einheitlich dimensionierten Kügelchen (18) des Produkts.

7. Verfahren gemäß Anspruch 6, in welchem der Tropfzusammenbau einen Trog (28) aufweist mit einer großen Anzahl von Zuführungselementen (40) für eine regulierte Abgabe der flüssigen Zusammensetzung aus dem Trog (28) und für die Zufuhr der flüssigen Zusammensetzung (20) in einheitlich dimensionierten Tröpfen (38).

8. Verfahren gemäß Anspruch 7, in welchem jedes der Zuführungselemente eine mit dem Trog (28) in Verbindung stehende Verlängerung (44) enthält.

9. Verfahren gemäß Anspruch 8, in welchem der Trog (28) eine große Anzahl von Öffnungen enthält, welche in einer unteren Wand (30) gebildet werden, wobei eine jede Öffnung (42) mit einer entsprechenden Verlängerung (44) in Verbindung steht.

10. Verfahren gemäß Anspruch 9, in welchem die Verlängerung (44) ein erstes Ende (46) aufweist, welches mit der entsprechenden Öffnung (42) in Verbindung steht, sowie ein zweites Ende (50) aufweist, welches mit Abstand von dem ersten Ende angeordnet ist.

## Revendications

1. Assemblage d'égouttage (10) pour alimenter une composition liquide (20) à une chambre de congélation (12), comprenant:
une cuvette (28) surplombant une chambre de congélation (12) et disposée pour recevoir une composition liquide (20) depuis une source de distribution (34), ladite cuvette (28) possédant une paroi inférieure (30) munie de plusieurs orifices (42) à travers lesquels est dirigée la composition liquide reçue; et
plusieurs éléments d'alimentation (40) comprenant chacun une saillie associée à ladite cuvette (28) et disposée à des fins d'évacuation régulée de ladite composition liquide (20) à partir de ladite cuvette (28) et pour alimenter ladite composition liquide (30) par gravité uniquement à ladite chambre de congélation (12) sous la forme de gouttelettes (38) de dimensions uniformes, chacun desdits plusieurs éléments d'alimentation (40) étant disposé en alignement en communication de fluide avec un desdits plusieurs orifices (42) pratiqués dans ladite paroi inférieure (30) de ladite cuvette (28) et chaque élément d'alimentation possédant un canal d'écoulement le traversant qui se rétrécit de forme conique depuis l'extrémité de l'élément d'alimentation proche desdits orifices jusqu'à son autre extrémité, si bien que des gouttelettes (38) de dimensions uniformes de la composition liquide sont distribuées par gravité à ladite chambre de congélation sous-jacente (12).

2. Procédé d'alimentation d'une composition liquide (20) à une chambre de congélation (12) contenant un réfrigérant pour former des billes (18) de dimensions uniformes d'un produit congelé, comprenant les étapes consistant à:
procurer un assemblage d'égouttage (10) possédant plusieurs éléments d'alimentation (40) comprenant chacun une saillie possédant une première extrémité et une seconde extrémité ainsi qu'un canal d'écoulement le traversant et possédant une forme conique qui se rétrécit depuis ladite première extrémité jusqu'à ladite seconde extrémité, les éléments d'alimentation étant configurés pour évacuer ladite composition liquide (20) sous la forme de gouttelettes (38) de dimensions uniformes;
placer ledit assemblage d'égouttage (10) directement au-dessus de ladite chambre de congélation (12) ;
distribuer ladite composition liquide (20) à partir d'une source (34) jusqu'audit assemblage d'égouttage (10), dans lequel ladite composition liquide est dirigée dans lesdites premières extrémités desdits plusieurs éléments d'alimentation (40);
distribuer ladite composition liquide (20) depuis ledit assemblage d'égouttage (10) par gravité uniquement à ladite'chambre de congélation (12) avec une évacuation régulée hors desdites secondes extrémités des éléments d'alimentation et sous la forme de gouttelettes (38) de dimensions uniformes;
mettre lesdites gouttelettes (38) de dimensions uniformes en contact avec ledit réfrigérant à des fins de congélation desdites gouttelettes (38) pour obtenir des billes congelées (18) de produit de dimensions uniformes.

3. Procédé selon la revendication 2, dans lequel ledit assemblage d'égouttage comprend une cuvette (28) possédant plusieurs éléments d'alimentation (40) à des fins d'évacuation régulée de la dite composition liquide depuis ladite cuvette (28) et à des fins d'alimentation de la dite composition liquide (20) sous la forme de gouttelettes (38) de dimensions uniformes.

4. Procédé selon la revendication 3, dans lequel ladite cuvette (28) comprend plusieurs orifices pratiqués dans une paroi inférieure (30), chaque orifice (42) étant associé à une saillie correspondante (44).

5. Assemblage d'égouttage (10) selon la revendication 4, dans lequel ladite saillie (44) possède une ouverture d'entrée (48) associée à ladite première extrémité (46) et une ouverture de sortie (52) associée à ladite seconde extrémité (50).

6. Procédé d'alimentation d'une composition liquide (20) à une chambre de congélation (12) contenant un réfrigérant pour former des billes (18) d'un produit congelé de dimensions uniformes, comprenant les étapes consistant à:
procurer un assemblage d'égouttage (10) possédant plusieurs éléments d'alimentation uniformément coniques (40) configurés pour évacuer ladite composition liquide (20) sous la forme de gouttelettes (38) de dimensions uniformes;
placer ledit assemblage d'égouttage (10) directement au-dessus de ladite chambre de congélation (12);
distribuer ladite composition liquide (20) à partir d'une source (34) jusqu'audit assemblage d'égouttage (10), dans lequel ladite composition liquide est dirigée dans lesdits plusieurs éléments d'alimentation (40);
distribuer ladite composition liquide (20) depuis ledit assemblage d'égouttage (10) par gravité uniquement à ladite chambre de congélation (12) avec une évacuation régulée et sous la forme de gouttelettes (38) de dimensions uniformes; et
mettre lesdites gouttelettes (38) de dimensions uniformes en contact avec ledit réfrigérant à des fins de congélation desdites gouttelettes (38) pour obtenir des billes congelées (18) de produit de dimensions uniformes sous forme.

7. Procédé selon la revendication 6, dans lequel ledit assemblage d'égouttage comprend une cuvette (28) possédant plusieurs éléments d'alimentation (40) à des fins d'évacuation régulée de la dite composition liquide depuis ladite cuvette (28) et à des fins d'alimentation de la dite composition liquide (20) sous la forme de gouttelettes (38) de dimensions uniformes.

8. Procédé selon la revendication 7, dans lequel lesdits éléments d'alimentation comprennent chacun une saillie (44) associée à ladite cuvette (28).

9. Procédé selon la revendication 8, dans lequel ladite 'cuvette (28) comprend plusieurs orifices pratiqués dans une paroi inférieure (30), chaque orifice (42) étant associé à une saillie correspondante (44).

10. Procédé selon la revendication 9, dans lequel ladite saillie (44) possède une première extrémité (46) d'ouverture associée audit orifice correspondant (42) et une seconde extrémité (50) espacée de ladite première extrémité.
